# EUROPEAN PATENT APPLICATION

(11) **EP 2 709 190 A1**
(43) Date of publication of application: **19.03.2014**
(21) Application number: 13161720.1
(22) Date of filing: 28.03.2013
(51) Int. Cl.: H01M 2/10

(54) **Battery Pack**

(30) Priority: 13.09.2012 KR 20120101805
(71) Applicant: Samsung SDI Co., Ltd., Yongin-si, Gyeonggi-do (KR)
(72) Inventor: Wang, Han-Jun, Gyeonggi-do (KR); Moon, Dae-Yon, Gyeonggi-do (KR)
(74) Representative: Taor, Simon Edward William

(57) **Abstract**

The battery pack includes a first case, a second case coupled with the first case, a plurality of battery cells which are received between the first case and the second case and are positioned side-by-side, and a label comprising a first surface attached to an outer surface of the first case and a second surface attached to an outer surface of the second case, in which a side coupling portion of the first case and the second case forms an outwardly convex round shape, the label comprises an intermediate surface which encloses an outer circumferential surface of the side coupling portion, and the intermediate surface is formed continuous from the first surface and the second surface. Thus, area and thickness of a label-attached portion of a case on which a label is attached may be minimized, allowing a slim structure of a battery pack.

## Description

One or more embodiments of the present invention relate to a battery pack.

As the development and demand of mobile devices has recently increased, there has been a rapid increase in demand for secondary batteries for use as energy sources. Based on their shapes, secondary cells may be classified into cylindrical cells, rectangular cells, pouch-shape cells, and so forth, and they may also be classified according to types of electrolytes. Due to the recent trend toward miniaturization of mobile devices, the demand for rectangular cells and pouch-shape cells having small thicknesses is increasing.

Based on how a secondary cell is mounted to a case, a battery pack is generally classified into a hard pack type and an inner pack type.

The hard pack type forms a part of the external appearance of an external device to which it is mounted. Thus, it is easy to mount the hard pack type to the external device in its use. However, since the case has to be designed to fit for a type of the external device with the battery cell is embedded therein, the hard pack type is relatively expensive and has low compatibility.

On the other hand, the inner pack type is covered with a cover which forms a part of the external device when it is mounted inside the external device, such that it is easy to design, is cheaper, and has good compatibility. The inner pack type includes a case which supports the battery cell, and has a label attached on the outmost surface of the inner pack type to protect the battery cell or provide information about the battery pack. However, to prevent the label from being lifted, a label-attached portion of a predetermined area on which the label is attached is required on the case.

One or more embodiments of the present invention include a battery pack having a slim structure.

Additional aspects will be set forth in part in the description which follows and, in part, will be apparent from the description, or may be learned by practice of the presented embodiments.

According to one or more embodiments of the present invention, a battery pack includes a first case, a second case coupled with the first case, a plurality of battery cells which are received between the first case and the second case and are positioned side-by-side, and a label including a first surface attached to an outer surface of the first case and a second surface attached to an outer surface of the second case, in which a side coupling portion of the first case and the second case forms an outwardly convex round shape, the label includes an intermediate surface which encloses an outer circumferential surface of the side coupling portion, and the intermediate surface is formed continuous from the first surface and the second surface.

The side coupling portion may form a curved surface having a predetermined curvature.

The first case may include a protrusion portion directed toward the second case, and the second case may include an engagement groove to which the protrusion portion is insertedly coupled.

The protrusion portion may have a holding protrusion, and the holding protrusion may be engaged to the engagement groove.

The battery pack may further include a spacer interposed between sides of the plurality of battery cells to insulate the battery cells.

A plurality of first openings may be formed in the first case, and a first support for supporting the battery cells may be formed at an edge of each of the plurality of first openings.

A plurality of second openings may be formed in the second case, and a second support for supporting the battery cells may be formed at an edge of each of the plurality of second openings.

A sum of thicknesses of the first support and the second support may be equal to a thickness of the battery cell increased when the battery cells are fully swollen.

The battery pack may further include a protrusion circuit module electrically connected with the plurality of battery cells.

The protection circuit module may be disposed in a side opposite to the side coupling portion.

According to one or more embodiments of the present invention, a battery pack includes a plurality of battery cells disposed side-by-side, a protection circuit module electrically connected with the plurality of battery cells, a first case and a second case coupled to each other to receive the plurality of battery cells and the protection circuit module, and a label including a first surface attached on an outer surface of the first case and a second surface attached on an outer surface of the second case, in which a side coupling portion of the first case and the second case form an outwardly convex round shape, the label includes an intermediate surface enclosing an outer circumferential surface of the side coupling portion, and the intermediate surface is formed continuous from the first surface and the second surface.

The side coupling portion may form a curved surface having a predetermined curvature.

A plurality of first openings and a plurality of second openings may be formed in the first case and the second case, respectively, to expose surfaces of the battery cells.

A first support and a second support may be formed at an edge of each the plurality of first openings and an edge of each of the plurality of second openings, respectively, to support the battery cells, and a sum of thicknesses of the first support and the second support may be equal to a thickness of the battery cell increased when the battery cells are fully swollen.

The battery pack may further include a spacer interposed between sides of the plurality of battery cells to insulate the battery cells.

The spacer may be disposed between the first support and the second support.
A side of the spacer may be shape-matched to a side of the battery cell which contacts the side of the spacer.

According to an aspect of the invention, there is provided a battery pack as set out in claim 1. Preferred features are set out in claims 2 to 15.

These and/or other aspects will become apparent and more readily appreciated from the following description of the embodiments, taken in conjunction with the accompanying drawings of which:
FIG. 1 is an exploded perspective view of a battery pack according to an embodiment of the present invention;
FIG. 2 is a diagram showing labeling of the battery pack shown in FIG. 1;
FIG. 3 is a cross-sectional view showing a cross-section cut along a line I-I' shown in
FIG. 2;

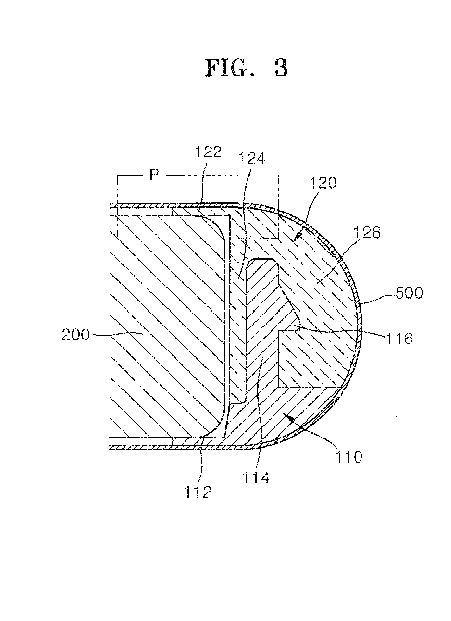

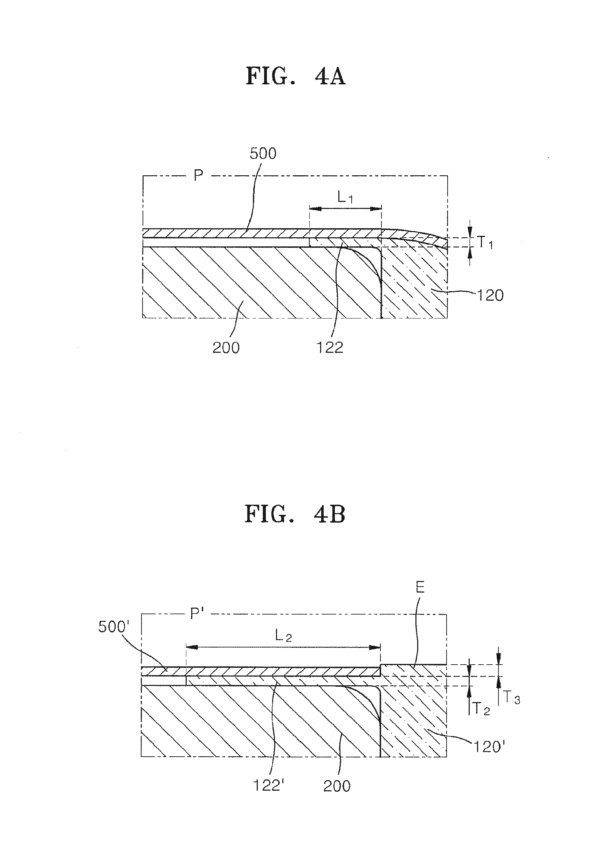

FIG. 4A is an enlarged view of a portion P shown in FIG. 3; and
FIG. 4B is a diagram for comparison with FIG. 4A.

The present invention will become apparent from embodiments described below in detail with reference to the accompanying drawings. However, the present invention is not limited to the disclosed embodiments and may be implemented in different forms. The embodiments are provided to complete the disclosure of the present invention and to allow those of ordinary skill in the art to fully understand the scope of the present invention, and the present invention is defined merely by the claims. The terms used herein are for illustrative purposes of the inventive concept only and should not be construed to limit the meaning or the scope of the inventive concept. As used in this specification, a singular form may, unless definitely indicating a particular case in terms of the context, include a plural form. Also, the expressions "comprise" and/or "comprising" used in this specification neither define the mentioned components, steps, operations and/or elements, nor exclude the presence or addition of one or more other different components, steps, operations and/or elements, or addition of these. As used herein, terms such as "first," "second," etc. are used to describe various components, but components should not be defined by these terms. Terms are used only for distinguishing one component from another component.

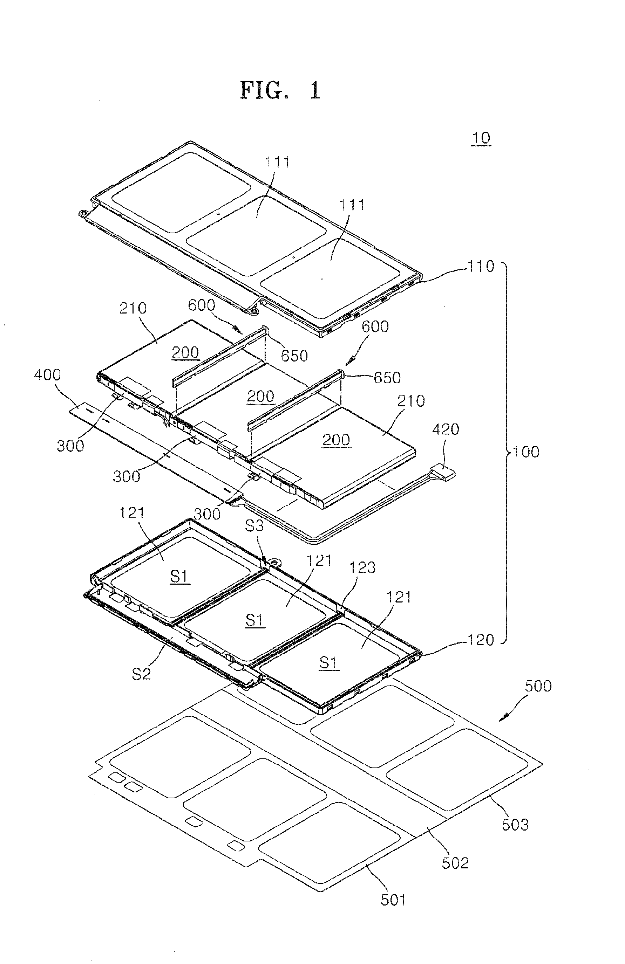

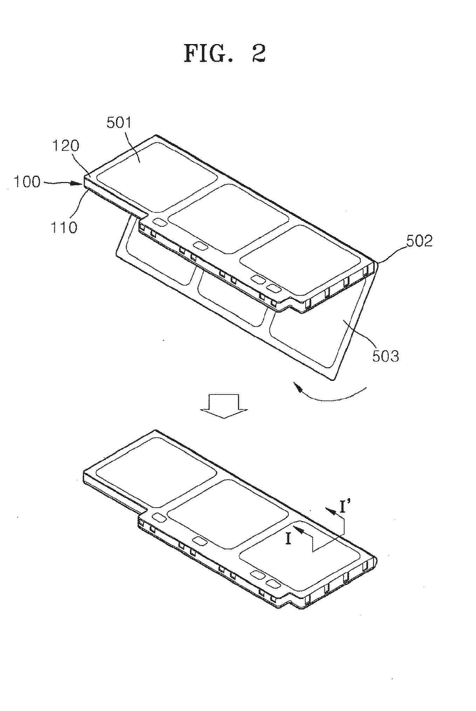

FIG. 1 is an exploded perspective view of a battery pack according to an embodiment of the present invention, FIG. 2 is a diagram showing labeling of the battery pack shown in FIG. 1, and FIG. 3 is a cross-sectional view showing a cross-section cut along a line I-I' shown in FIG. 2.

Referring to FIG. 1, a battery pack 10 according to an embodiment of the present invention may include a case 100 which includes a first case 110 and a second case 120 which are coupled to each other, a plurality of battery cells 200 which are received between the first case 110 and the second case 120 and are positioned in parallel with each other, and a label 500 which is attached on an outer surface of the case 100.

The plurality of battery cells 200 are rechargeable secondary cells and may include, for example, lithium-ion cells. Each of the plurality of battery cells includes an electrode assembly (not shown) and a can 210 which receives the electrode assembly (not shown), and the electrode assembly (not shown) may be manufactured by depositing an anode plate, a cathode plate, and a separator interposed therebetween, and winding them in the form of a jelly roll.

The can 210 is made of a metallic material and may have a first electric charge on a surface thereof. For example, the can 210 may be formed of, but not limited to, aluminum or an aluminum alloy.

The plurality of battery cells 200 may be disposed side-by-side along one direction, and the plurality of battery cells may be connected in series or in parallel by a lead plate 300. While three battery cells 200 are connected in series to form one battery pack 10 in FIG. 1, the present invention is not limited to this example. That is, the number of battery cells 200 forming the battery pack 10 or how to connect them is not particularly limited and various numbers may be used in embodiments of the invention.

The plurality of battery cells 200 may be electrically connected with a protection circuit module 400. The protection circuit module 400 may prevent overheat or explosion occurring due to overcharge, over-discharge, or over-current of the plurality of battery cells 200 connected in series or in parallel.

The protection circuit module 400 may include a substrate 410 and protection elements (not shown) mounted at a side of or inside the substrate 410. The protection elements may include a safety element including passive elements such as a resistor and a condenser and an active element such as a field effect transistor (FET), or integrated circuits.

A connector 420 may be provided at a side of the protection circuit module 400 to supply power to an external electronic device. The connector 420 is connected with an electronic device on which the battery pack 10 is mounted.

Since the exterior of the battery cell 200 is formed by the can 210 having conductivity, the plurality of battery cells 200 disposed side-by-side have to be insulated from each other. To this end, a spacer 600 is disposed between adjacent battery cells 200 to prevent short circuit between the adjacent battery cells 200.

The spacer 600 is formed of an insulating material such as plastic, and the length of the spacer 600 may be longer than that of the battery cell 200.

The spacer 600 may be positioned between a first support 112 and a second support 122, such that the spacer 600, together with the first support 112 and the second support 122 fixes the battery cells 200.

For example, both sides of the spacer 600 may be formed to be matched with sides of the battery cells 200 contacting the sides of the spacer 600. For example, when the sides of the battery cells 200 have an outwardly convex shape, both sides of the spacer 600 contacting the battery cells 200 according to some embodiments have a concave shape, thereby efficiently fixing the battery cells 200.

A blocking portion 650 may be formed at one end of the spacer 600. The blocking portion 650 may extend in a perpendicular to a longitudinal direction of the spacer 600. For example, the blocking portion 650 may extend to the left and to the right, such that the spacer 600 may have an overall T-shape. The blocking portion 650 extending to the left and to the right may contact lower portions of the battery cells 200 disposed at both sides of the spacer 600. A space S3 for seating the blocking portion 650 thereon may be formed on a side of the second case 120, and the blocking portion 650 may contact an inner side 123 of the second case 120.

The first case 110 and the second case 120 are coupled to each other to form a space S1 for receiving the plurality of battery cells 200 and a space S2 for receiving the protection circuit module 400.

The first case 110 and the second case 120 may be formed by injecting an insulating plastic material. The plastic material may be, but not limited to, polyvinyl chloride (PVC), polystyrene (PS), polypropylene (PP), polycarbonate (PC), polyimide (PI), etc. In the first case 110 are formed a plurality of first openings 111 to minimize an overall thickness of the case 100, and respective one surfaces of the plurality of battery cells 200 are exposed by the plurality of first openings 111. The first support 112 for supporting an edge of a top surface or bottom surface of the battery cell 200 are formed at an edge of each of the plurality of first openings 111.

Likewise, in the second case 120 are formed a plurality of second openings 121 which expose respective another surfaces of the plurality of battery cells 200, and the second support 122 is formed at an edge of each of the plurality of second openings 121.

A sum of thicknesses of the first support 112 and the second support 122 may be equal to a thickness of the battery cell 200 increased when the battery cells 200 are fully swollen. As will be described below, a label 500 is attached on the first support 112 and the second support 122 which have particular thicknesses, and the battery cell 200 is swollen in charging/discharging. If a sum of thicknesses of the first support 112 and the second support 122 is equal to a thickness of the battery cell 200 increased when the battery cells 200 are fully swollen, a swelling space for the battery cells 200 is secured, such that in spite of swelling of the battery cell 200, an overall external appearance of the battery pack 10 is not changed or remains about the same.

The first case 110 and the second case 120 may be insertedly coupled to each other by a hook structure formed along their sides.

As shown in FIG. 3, the first case 110 and the second case 120 may include a side coupling portion which forms an outwardly convex round shape. Herein, the side coupling portion refers to an opposite side to a region where the protection circuit module 400 is positioned, that is, a lower side with respect to the battery cell 200.

More specifically, in the side coupling portion of this embodiment, the first case 110 includes a protrusion portion 114 directed toward the second case 120, and the second case 120 may include a first fixing portion 124 and a second fixing portion 126 which form an engagement groove to allow the protrusion portion 114 to be insertedly coupled thereto.

The protrusion portion 114 includes a holding protrusion 116, and a holding latch to which the holding protrusion 116 is engaged may be formed in the engagement groove. For example, a groove in a concave shape matched to the shape of the holding protrusion 116 may be formed in the second fixing portion 126. Thus, the first case 110 and the second case 120 may be easily coupled in a one-touch manner. It will be appreciated that other embodiments of the invention can use other configurations for the side coupling portion of the first and second cases 110, 120.

The label 500 is attached to the first case 110 and the second case 120 when coupled to each other. More specifically, the label 500 may include a first surface 501 attached on an outer surface of the second case 120, a second surface 503 attached on an outer surface of the first case 110, and an intermediate surface 502 which surrounds an outer circumferential surface of the side coupling portion. The intermediate surface 503 connects the first surface 501 and the second surface 502, and is formed continuous from the first surface 501 and the second surface 502.

FIG. 2 is a diagram showing how to attach the label 500, and referring to FIG. 2, first, the first surface 501 is attached on the second case 120. While the order of attachment of the label 500 is not specially limited, the first surface 501 may be first attached on the second case 120 in terms of attachment efficiency because the space S2 for seating the protection circuit module 400 thereon is further formed on the second case 120 and a portion for covering the space S2 is further formed on the first surface 501.

In the second case 120 are formed the plurality of second openings 121 through which the battery cells 200 are exposed, such that the first surface 501 is attached on the battery cells 200 as well as on the second case 120.

Once the first surface 501 is attached on the second case 120, the intermediate surface 502 is successively attached on an outer side of the side coupling portion of the first case 110 and the second case 120.

As shown in FIG. 3, the side coupling portion of the first case 110 and the second case 120 forms an outwardly convex round shape, such that the label 500 may be continuously attached without being folded. In addition, an attached area of the label 500 may be maximized, such that the second support 122 of the second case 120 on which the label 500 is attached may have a minimum label-attached area. In other embodiments, the side coupling portion defined by the first case 110 and the second case 120 can have a curved shape, for example a curved shape that allows the label 500 to be continuously attached without being folded.

The side coupling portion may form a curved surface having a predetermined curvature. When the intermediate surface 502 is attached to the side coupling portion, a tension is applied in the same direction as a tangent line of the curved surface formed by the side coupling portion, such that the intermediate surface 502 is sequentially attached on the side coupling portion while maintaining a tight state. Thus, when the side coupling portion forms the curved surface having a predetermined curvature, the tension applied to the intermediate surface 502 during attachment of the intermediate surface 502 may be maintained constant, thereby attaching the intermediate surface 502 while effectively inhibiting generation of air bubbles or lifting.

After completion of attachment of the intermediate surface 502, the second surface 503 is successively attached on the first case 110.

As mentioned above, the plurality of first openings 111 which expose the plurality of battery cells 200 are formed in the first case 110, such that the second surface 503 is also attached on the battery cells 200 as well as on the first case 110. Thus, the battery cells may be effectively fixed because their top surfaces and bottom surfaces are attached by the label 500.

FIG. 4A is an enlarged view of a portion P shown in FIG. 3, and FIG. 4B is a diagram for comparison with FIG. 4A. Herein, in FIG. 4B, a label attached to a battery pack is attached separately on a top surface and a bottom surface, and FIG. 4B shows an enlargement of a portion corresponding to the portion P shown in FIG. 4A. That is, FIG. 4B shows an enlargement of a second case 120' for comparison with FIG. 4A.

Referring to FIG. 4B, a label 500' is attached on a first case (not shown) and the second case 120' positioned on both surfaces of the battery cell 200, such that a minimum label-attached area for attaching the label 500' to the first case (not shown) and the second case 120' should be secured, and a region on which the label 500' is attached has to be defined.

As a result, the region on which the label 500' is attached, e.g., a second support 122' of the second case 120' needs to be formed with a long length L₂ to secure the minimum label-attached area. Moreover, considering injection of the second support 122' formed long, the second support 122' needs to have a predetermined thickness T_{2.} Furthermore, to define the region on which the label 500' is attached, a step portion E has to be formed in the second case 120'. When the step portion E has a thickness of T_{3,} the thickness of the second case 120' is equal to T₂+T₃.

On the other hand, referring to FIGS. 3 and 4A, the first case 110 and the second case 120 have the side coupling portion which forms an outwardly convex round shape, such that the label 500 may be continuously attached on the case 100.

That is, since the label 500 is attached while enclosing a side of the case 100, an attached area of the label 500 is maximized, such that the second support 122 of the second case 120 and the first support 112 of the first case 110 on which the label 500 is attached may have a minimum label-attached area. The first support 112 and the second support 122 may be formed to support the battery cell 200 and to prevent the battery cell 200 from leaving the case 100. Thus, both the length L₁ of the second support 122 and the thickness T₁ of the second support 122 may be reduced. Consequently, the battery pack 10 may have a slim structure.

As described above, according to the one or more of the above embodiments of the present invention, area and thickness of a label-attached portion of a case on which a label is attached may be minimized, allowing a slim structure of a battery pack.

As discussed above, embodiments of the invention provide a battery pack comprising: a plurality of battery cells disposed side-by-side; a first case and a second case coupled to each other to receive the plurality of battery cells; a label comprising a first surface attached on an outer surface of the first case and a second surface attached to an outer surface of a second case; wherein the first and second cases define a side coupling portion that has a curved shape and wherein the label further comprises an intermediate surface that interconnects the first and second surfaces wherein the intermediate surface of the label continuously encloses an outer circumference of the curved shape of the side coupling portion from the first surface to the second surface. In some embodiments, the curved surface comprises an outwardly convex round shape. In other embodiments, it will be appreciated that the curved surface could have other shapes.

While the present invention has been described with reference to the aforementioned embodiments, various modifications or changes can be made without departing from the subject matter or scope of the present invention. Therefore, the scope of the appended claims may include such modifications or changes included in the subject matter of the present invention.

## Claims

1. A battery pack comprising:
a plurality of battery cells disposed side-by-side;
a first case and a second case coupled to each other to receive the plurality of battery cells;
a label comprising a first surface attached on an outer surface of the first case and a second surface attached to an outer surface of a second case;
wherein the first and second cases define a side coupling portion that has a curved shape and wherein the label further comprises an intermediate surface that interconnects the first and second surfaces wherein the intermediate surface of the label continuously encloses an outer circumference of the curved shape of the side coupling portion from the first surface to the second surface.

2. The battery pack of claim 1, wherein the curved surface comprises an outwardly convex round shape.

3. The battery pack of claim 1 or 2, wherein the side coupling portion forms a curved surface having a predetermined curvature.

4. The battery pack of claim 1, wherein the first case comprises a protrusion portion directed toward the second case, and the second case comprises an engagement groove to which the protrusion portion is insertedly coupled, the protrusion portion and the engagement groove forming part of the side coupling portion.

5. The battery pack of claim 4, wherein the protrusion portion comprises a holding protrusion, and the holding protrusion is engaged to the engagement groove.

6. The battery pack of any one of claims 1 to 5, further comprising a spacer interposed between sides of the plurality of battery cells to insulate the battery cells.

7. The battery pack of claim 6, wherein the spacer is disposed between the first support and the second support.

8. The battery pack of claim 6 or 7, wherein a side of the spacer is shape-matched to a side of the battery cell which contacts the side of the spacer.

9. The battery pack of any one of claims 1 to 8, wherein a plurality of first openings are formed in the first case, and a first support for supporting the battery cells is formed at an edge of each of the plurality of first openings.

10. The battery pack of claim 9, wherein a plurality of second openings are formed in the second case, and a second support for supporting the battery cells is formed at an edge of each of the plurality of second openings.

11. The battery pack of claim 10, wherein a sum of thicknesses of the first support and the second support is equal to a thickness of the battery cells increased when the battery cells are fully swollen.

12. The battery pack of any one of claims 1 to 8, wherein a plurality of first openings and a plurality of second openings are formed in the first case and the second case, respectively, to expose surfaces of the battery cells.

13. The battery pack of claim 12, wherein a first support and a second support are formed at an edge of each of the plurality of first openings and an edge of each of the plurality of second openings, respectively, to support the battery cells, and a sum of thicknesses of the first support and the second support is equal to a thickness of the battery cells increased when the battery cells are fully swollen.

14. The battery pack of any one of claims 1 to 13, further comprising a protection circuit module electrically connected with the plurality of battery cells.

15. The battery pack of claim 14, wherein the protection circuit module is disposed in a side opposite to the side coupling portion.
